# EUROPEAN PATENT APPLICATION

(11) **EP 2 713 258 A1**
(43) Date of publication of application: **02.04.2014**
(21) Application number: 12006736.8
(22) Date of filing: 27.09.2012
(51) Int. Cl.: G06F 3/0485, G06F 3/0482, H04N 5/445

(54) **Method for generating a graphical user interface menu**

(71) Applicant: Advanced Digital Broadcast S.A., 1292 Chambesy (CH)
(72) Inventor: Wielgosz, Marcin, 65-119 Zielona Gora (PL)
(74) Representative: Blonski, Pawel

(57) **Abstract**

A method for generating a graphical user interface menu, the method comprising the steps of generating a first (201) and a second (202) transversely extending and intersecting scroll lists wherein each scroll list comprises a plurality of scroll list elements that can be scrolled successively through a focus region (203) positioned at the intersection of the scroll lists, wherein the method further comprises the steps of receiving a request to scroll, among the plurality of scroll list elements, away from the focus region, wherein the request to scroll allows identifying which scroll list is to be scrolled; scrolling the identified scroll list elements such that the focus region always comprises a scroll list element of the identified scroll list; whereas in case the request to scroll switches between the first and the second scroll lists respectively, the scroll list element, previously in the focus region, is displayed adjacent the focus region on the scroll list it is associated with.

## Description

The present invention relates to a method for generating a graphical user interface menu. The invention has its preferred, but not exclusive, application to an interactive multi-channel television set top box (STB) for selecting content items from a variety of different sources such as digital television broadcast channels, pre-recorded content (such as recordings, music, images) and the Internet (such as but not limited to video streaming, audio streaming, electronic mail or word wide web).

Recent advances in software technology and wide spread of computer devices with graphical user interface (GUI) have greatly increased the number of available options within personal computers, interactive television systems, smartphones, and other computer information systems displaying GUI and being operated via GUI interaction. For instance, current STB systems offer hundreds of broadcast channels and a variety of interactive options, including electronic mail, videoconferencing, social networking applications, instant messaging applications, Internet browsing software and external media browsing (such as video, music, or images).

Prior art of United States Patent 7594246 entitled - "System and method for focused navigation within a user interface" discloses a menu of intersecting lists. As illustrated in Fig. 6 of this prior art publication, the second sequence 300*b* may be displayed horizontally, perpendicular to the first sequence 300*a*, such that the sequences 300*a-b* intersect at (and define) the focus area 302. Any number of sequences 300 may be displayed on the GUI 110 simultaneously. Therefore, a user is presented with a wide variety of options. Typically these options will be interactive.

In the depicted embodiment, the "Up" and "Down" buttons 116, 118 may be used to shift or cycle the vertically-displayed sequence 300*a* within the GUI 110 in order to bring one of the corresponding cards 200*a-e* into the focus area 302. Likewise, the "Left" and "Right" buttons 120, 122 may be used to shift or cycle the horizontally-displayed sequence 300*b* to bring one of the corresponding cards 200*g-k* into the focus area 302.

In one implementation, bringing a card 200 from one sequence 300 into the focus area 302 will determine or change which other sequence 300 is displayed. For example, bringing the card 200*h* (TV shape) from the horizontal sequence 300*b* into focus may result in the vertical sequence 300*a* (television programs) being displayed. Alternatively, bringing the card 200*g* (envelope shape) into focus may result in a vertical sequence 300 (not shown) corresponding to e-mail messages or contacts.

The '246 publication does not address a situation where there is a plurality of items of one list associated with only one item of the other list. The user is at all times presented with two lists fully extended, which makes the system inconvenient to use because of complex navigation and the number of options being present on a display screen.

It would thus be advantageous to provide a new and improved method for navigation among items of a first and a second transversely extending and intersecting scroll lists wherein each scroll list comprises a plurality of scroll list elements that can be scrolled successively through a focus region positioned at the intersection of the scroll lists. Such improved method shall be easier to navigate and allow quick access to the focused list while also improving access of a user to the second scroll list.

The object of the invention is a method for generating a graphical user interface menu, the method comprising the step of generating a first and a second transversely extending and intersecting scroll lists wherein each scroll list comprises a plurality of scroll list elements that can be scrolled successively through a focus region positioned at the intersection of the scroll lists. Further the method comprises the steps of receiving a request to scroll, among the plurality of scroll list elements, away from the focus region, wherein the request to scroll allows identification which scroll list is to be scrolled; scrolling the identified scroll list elements such that the focus region always comprises a scroll list element of the identified scroll list; whereas in case the request to scroll switches between the first and the second scroll lists respectively, the scroll list element, previously in the focus region, is displayed adjacent the focus region on the scroll list it is associated with.

Preferably, the intersecting arrangement is a four-way of a three-way intersection.

Preferably, in case the request to scroll switches between the first and the second scroll lists respectively, the scroll list previously in focus is displayed such that only one of its scroll list elements is visible.

Favorably, the method comprises a further step of allowing navigation request from the first scroll list to the second scroll list by means of a single direction selection action.

Preferably, a direction selection action is selected from the group of 'Up', 'Down', 'Left', 'Right'.

Preferably, the step of displaying adjacent the focus region is displaying on the left or on the right side of the focus region.

Preferably, the intersecting arrangement, be it three-way or four-way arrangement, is defined at a right angle.

A further object of the invention is a computer program comprising program code means for performing all the steps of the method, according to the method of the present invention, when said program is run on a computer.

Another object of the present invention is a computer readable medium, storing computer-executable instructions performing all the steps of the computer-implemented method according to the method of the present invention, when executed on a computer.

The method arrangement according to the invention allows for improved navigation and improves readability of the GUI. The method does not require as many navigation commands from the user, as prior art methods, and makes the GUI simpler.

The object of the invention is shown, by means of exemplary embodiments, on a drawing, in which:
Fig. 1 depicts a block diagram of a set-top box system according to the present invention;
Fig. 2 presents a graphical user interface screen, according to the present invention, in a first state;
Fig. 3 shows a graphical user interface screen, according to the present invention, in a second state;
Fig. 4 presents a graphical user interface, according to the present invention, screen in a third state;
Fig. 5 presents a diagram of the method steps according to the present invention.

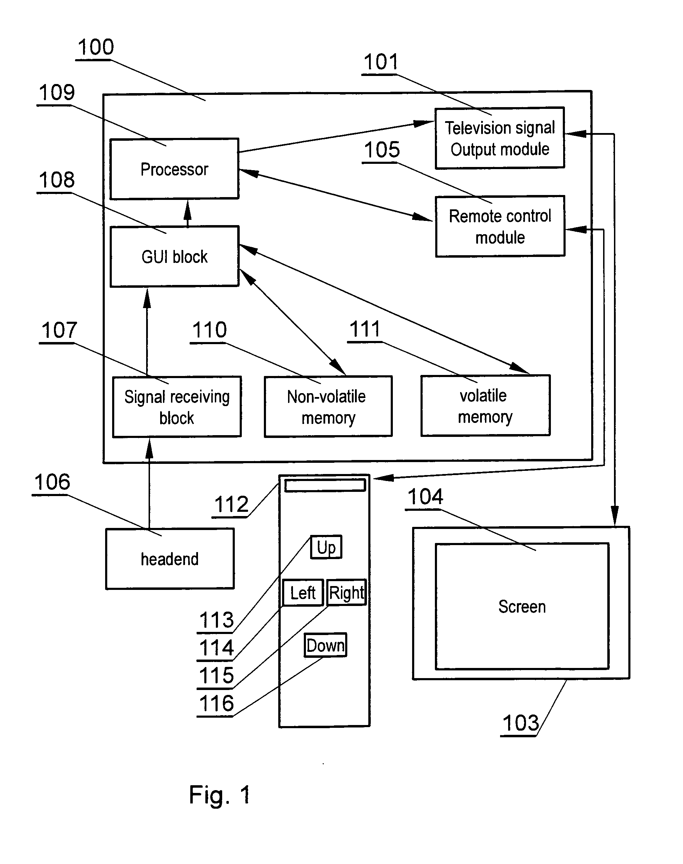

FIG. 1 depicts a block diagram of a set-top box system 100 according to an embodiment of the invention. In one configuration, the set-top box system 100 includes a television signal output module connected 101 to a display device 103 having a display screen 104. Typically, connection with an external display device is effected by means of a SCART connection or a HDMI connection.

The set-top box (STB) 100, is controlled with a remote control unit 112 (RCU) connected to a remote control module 105. The remote control 112 is typically connected to the remote control module 105 by means of a wireless infrared connection (or other RF connection), which in certain embodiments may be either unidirectional or bidirectional.

In addition, the remote control 112 may include a number of functional buttons or other similar controls. Typically, a set of directional buttons is present on a remote control 112, namely an "Up" button 113, a "Down" button 116, a "Left" button 114, a "Right" button 115.

The STB 100, is an intermediate device between a headend 106 (for example IPTV, Terrestrial, Satellite or Cable) and a display device 103, which may also be built-in device in the STB 100. Alternatively small-sized STBs 100 may be integrated into large TV displays.

The headend 106, transmits to the STB 100, signals comprising various data such as television or radio data. The data are received by means of a signal reception block 107, which in a typical embodiment will comprise a demultiplexer, descrambler and a decoder. The STB 100, receives data and processes the same for display on the display screen 103. The STB 100, may also include hardware and software for presenting a graphical user interface (GUI) 108 on the display screen 103 for operating the various functions and services provided by the STB 100.

The processor 109, cooperates with the GUI block 108 in order to generate an present GUI by means of the television signal output module 101. The processor 109, is bidirectionally connected to various types of memories such as non-volatile memory 109 (eg. Flash, HDD) and volatile memory 110 (eg. RAM). The software for presenting a graphical user interface (GUI) is stored in these memories as computer executable instructions that are to be processed by the processor 109. Further, the memories store graphical data related to the graphical user interface.

As explained, the STB 100, typically provides access to a plurality of selectable options by means of a GUI. The typical options are channels, programs, applications, digital media files, web pages, e-mail programs, chat clients, personal video recorder (PVR) applications, and the like. Furthermore, modern STBs 100, typically store or provide access to stored digital recordings, photographs, audio files, video streaming, interactive games or other forms of digital media.

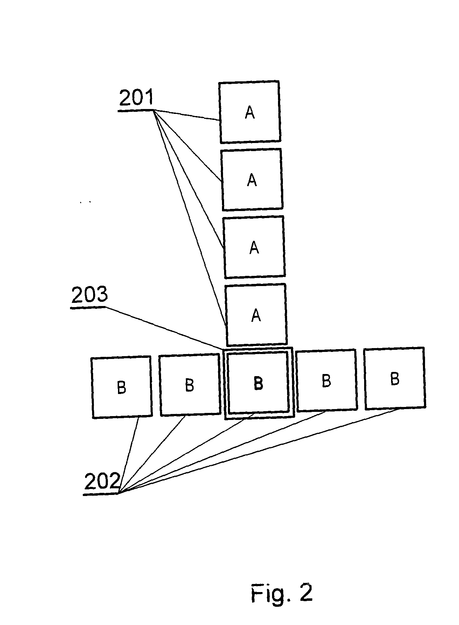

Fig. 2 presents a graphical user interface screen, in a first state, wherein there have been generated a first 201 and a second 202 transversely extending and intersecting scroll lists wherein each scroll list comprises a plurality of scroll list elements that can be scrolled successively through a focus region 203 positioned at the intersection of the scroll lists.

The intersection may be a 4-way intersection or a 3-way T-intersection as depicted in Fig. 2. The intersection is preferably defined at a right angle, however in other embodiments the angle may be different such as 45 degrees and 135 degrees.

For instance, one or more scroll list elements of the first 201 scroll list may represent currently available television programs, while one or more scroll list elements of the second 202 scroll list may represent available television channels with which said television programs are associated.

At the state of GUI, as shown in Fig. 2, the system awaits for receiving a request to scroll, among the plurality of scroll list elements, away from the focus region, wherein the request to scroll allows identification which scroll list is to be scrolled. For example pressing "Up" button will select the first list 201 while pressing "Left" or "Right" button will select the second list 202. In the current state of the GUI, as in Fig. 2, list 202 is in focus as the element of this list is in the focus region 203.

In the depicted embodiment, the "Up" and "Down" buttons may be used to shift or cycle through the vertically-displayed first scroll list 201 within the GUI in order to bring one of the corresponding scroll list elements into the focus area 203. Likewise, the "Left" and "Right" buttons may be used to shift or cycle the horizontally-displayed sequence 202 to bring one of the corresponding scroll list elements into the focus area 203.

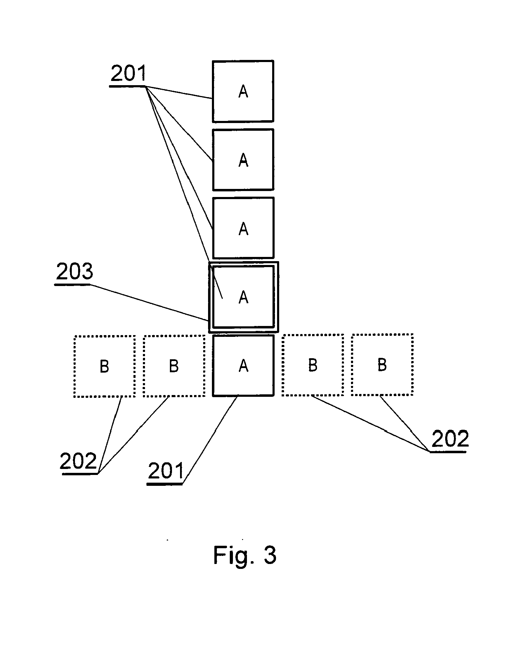

When the request to scroll is associated with the "Up" button press, the GUI will change to the second state depicted in Fig. 3. In this state, the focus region is shifted one position up and the scroll list elements of the second scroll list are removed from the GUI. This is done with the intention to make the second scroll list available with a single button press whereas if the scroll list elements 202 have been left displayed in the state of Fig. 3 there would be two button presses required in order to access scroll list elements 201, namely "Down" and "Left" or "Right".

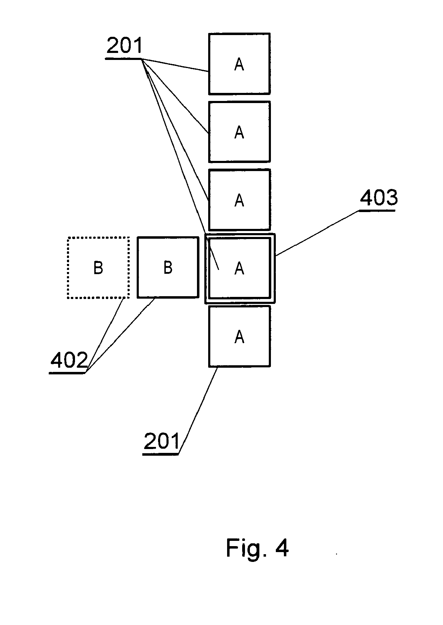

The final state of the GUI is reached, as shown in Fig. 4, when the request to scroll switches between the first and the second scroll lists respectively, the scroll list element 202, previously in the focus region 203, is displayed adjacent 402 the focus region 403 on the scroll list it is associated with.

By such an arrangement, the second scroll list is always available with a single button press - in case of Fig. 4 GUI it is the "Left" button press. The second scroll list may have only a single scroll list element 402 displayed in order not to focus user's attention since the focus is on the first scroll list 201. In other embodiments there may be visible more that a single scroll list element 402. The number of visible elements may be configurable by a user.

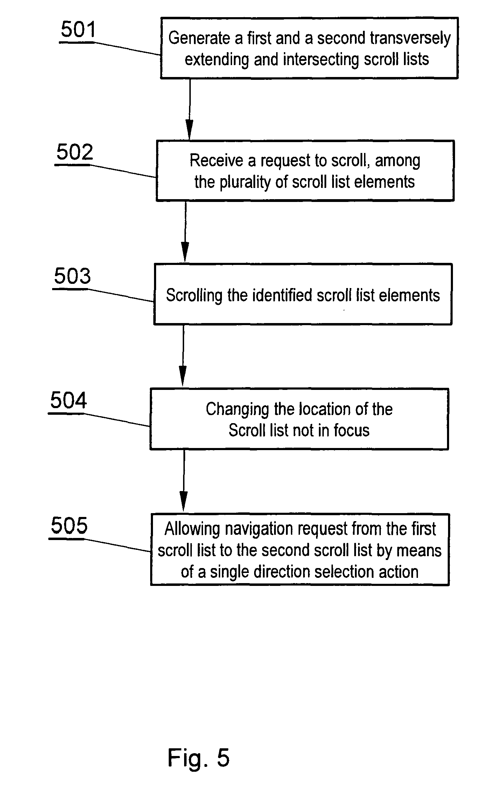

Fig. 5 presents a diagram of the method according to the present invention. The method starts at step 501 where there is executed generating (501) a first and a second transversely extending and intersecting scroll lists wherein each scroll list comprises a plurality of scroll list elements that can be scrolled successively through a focus region positioned at the intersection of the scroll lists. In a preferred embodiment the focus region is positioned in a fixed location on the display screen.

Next, at step 502, the method awaits for receiving a request to scroll (502), among the plurality of scroll list elements, away from the focus region, wherein the request to scroll allows identification which scroll list is to be scrolled. When such request has been received, the method proceeds to step of scrolling (503) the identified scroll list elements such that the focus region always comprises a scroll list element of the identified scroll list.

Subsequently, in case the request to scroll switches between the first and the second scroll lists respectively, the scroll list element, previously in the focus region, is displayed adjacent the focus region on the scroll list it is associated with (504). Finally, the method ends at step of allowing navigation request from the first scroll list to the second scroll list by means of a single direction selection action (505).

The methods and systems as described above can be implemented in a computer system, and performed or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like.

The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation, in the foregoing specification, do not imply any limitation on the invention whatsoever. It will, however, be evident that various modifications and changes may be made thereto without departing from the broader scope of the presented technical concept.

The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for generating a graphical user interface menu, the method comprising the steps of:
○ Generating (501) a first and a second transversely extending and intersecting scroll lists wherein each scroll list comprises a plurality of scroll list elements that can be scrolled successively through a focus region positioned at the intersection of the scroll lists;
The method being **characterized in that** it further comprises the steps of:
○ Receiving a request to scroll (502), among the plurality of scroll list elements, away from the focus region, wherein the request to scroll allows identification which scroll list is to be scrolled;
○ Scrolling (503) the identified scroll list elements such that the focus region always comprises a scroll list element of the identified scroll list;
○ Whereas in case the request to scroll switches between the first and the second scroll lists respectively, the scroll list element, previously in the focus region, is displayed adjacent the focus region on the scroll list it is associated with (504).

2. The method according to claim 1, **characterized in that** the intersecting arrangement is a 4-way of a 3-way intersection.

3. The method according to claim 1, **characterized in that** in case the request to scroll switches between the first and the second scroll lists respectively, the scroll list previously in focus is displayed such that only one of its scroll list elements is visible

4. The method according to claim 1, **characterized in that** it comprises a further step of allowing navigation request from the first scroll list to the second scroll list by means of a single direction selection action (505).

5. The method according to claim 1, **characterized in that** direction selection action is 'Up' or 'Down" or 'Left' or 'Right'.

6. The method according to claim 1, **characterized in that** the step of displaying adjacent the focus region is displaying on the left or on the right side of the focus region.

7. The method according to claim 1, **characterized in that** the intersecting arrangement is defined at a right angle.

8. A computer program comprising program code means for performing all the steps of the method according to any of claims 1-7 when said program is run on a computer.

9. A computer readable medium storing computer-executable instructions performing all the steps of the computer-implemented method according to any of claims 1 to 7 when executed on a computer.

## Amended claims

### Amended claims in accordance with Rule 137(2) EPC.

**1.** A method for generating a graphical user interface menu, the method comprising the steps of:
o Generating (501) a first and a second transversely extending and intersecting scroll lists wherein each scroll list comprises a plurality of scroll list elements that can be scrolled successively through a focus region positioned at the intersection of the scroll lists;
o Displaying a plurality of scroll list elements on both scroll lists;
The method being **characterized in that** it further comprises the steps of:
o Receiving a request to scroll (502), among the plurality of scroll list elements, away from the focus region, wherein the request to scroll allows identification which scroll list is to be scrolled;
o Scrolling (503) the identified scroll list elements such that the focus region always comprises a scroll list element of the identified scroll list;
o Whereas in case the request to scroll switches between the first and the second scroll lists respectively:
o displaying the scroll list element, previously in the focus region, adjacent the focus region on the scroll list it is associated with (504);
o displaying a plurality of scroll list elements on the selected scroll list; and
o displaying a single scroll list element on the non-selected scroll list.

**2.** The method according to claim 1, **characterized in that** the intersecting arrangement is a 4-way of a 3-way intersection.

**3.** The method according to claim 1, **characterized in that** in case the request to scroll switches between the first and the second scroll lists respectively, the scroll list previously in focus is displayed such that only one of its scroll list elements is visible

**4.** The method according to claim 1, **characterized in that** it comprises a further step of allowing navigation request from the first scroll list to the second scroll list by means of a single direction selection action (505).

**5.** The method according to claim 1, **characterized in that** direction selection action is 'Up' or 'Down" or 'Left' or 'Right'.

**6.** The method according to claim 1, **characterized in that** the step of displaying adjacent the focus region is displaying on the left or on the right side of the focus region.

**7.** The method according to claim 1, **characterized in that** the intersecting arrangement is defined at a right angle.

**8.** A computer program comprising program code means for performing all the steps of the method according to any of claims 1-7 when said program is run on a computer.

**9.** A computer readable medium storing computer-executable instructions performing all the steps of the computer-implemented method according to any of claims 1 to 7 when executed on a computer.
